# EUROPEAN PATENT APPLICATION

(11) **EP 1 255 063 A2**
(43) Date of publication of application: **06.11.2002**
(21) Application number: 02251536.5
(22) Date of filing: 05.03.2002
(51) Int. Cl.: F16H 55/30, F16H 7/08

(54) **Self-tensioning sprocket for power transmission chain**

(30) Priority: 05.03.2001 US 273364
(71) Applicant: BorgWarner Inc., Troy, Michigan 48007-5060 (US)
(72) Inventor: Mott, Philip J., Dryden, New York 13053 (US); White, David C., Dryden, New York 13053 (US)
(74) Representative: Lerwill, John

(57) **Abstract**

A split sprocket (2) for use with power transmission chains (3), with a spring (33) rotationally biasing the halves (16)(17) of the sprocket, in which the relative rotation of the two halves under the influence of the spring caused an effective increase in diameter of the saddles (25) between the teeth of the sprocket, thereby automatically taking up tension in a chain.

## Description

### BACKGROUND OF THE INVENTION

### FIELD OF THE INVENTION

The invention pertains to the field of sprockets for power transmission chains. More particularly, the invention pertains to sprockets which contribute to chain tension.

### DESCRIPTION OF RELATED ART

A power transmission chain typically rides on a sprocket of fixed geometry. This sprocket has teeth that engage the corresponding toes of the power transmission chain. The geometry of the teeth on the sprocket is such that the toes of the chain have a fixed seated position on the sprocket. The faces of two opposing teeth form a "V" into which the toe of a chin link will reside.

The tension on a power transmission chain have in the past been controlled by movable sprockets, idler sprockets, or tensioners (moving guides or other structures which press on the chain). Other arrangements have been tried in the prior art, often involving sprockets whose diameter can be changed by radially moving the teeth in one form or another. For example, Reeves, U.S. Patent 4,531,926 shows a sprocket with teeth which are adjustable to take up the effects of wear of the teeth. The teeth are adjusted by rotating a ratchet-toothed inner wheel which pushes outward on the backs of the teeth.

Split gears, that is, gears having two sets of sub-gears on a single shaft, in which the teeth of the sub-gears are offset from one another, are known to the art. For example, see Ward, U.S. Patent 108,539, "Mill Gearing".

These gears are often called "anti-backlash gears", and in most cases one of the sub-gears is biased by a spring or torsion bar or the like, as in Gaither, U.S. Patent 2,868,033, "Torsion Bar Anti-Backlash Gear", in order to take up the space or "backlash" between the teeth of the split gear and the conventional gear with which it mates. One common type of anti-backlash gear is the "scissor gear", in which the spring-loaded subgear is a relatively small part of the thickness of the gear, as in Shook, et. al, U.S. Patent 5,979,259, "Gear Train Assembly Including a Scissor Gear". In such gear sets, the split gears mesh with conventional gears, rather than being sprockets for use in transmitting power to or from chains.

Sugimoto, U.S. Patent 3,605,513, "Multiple Contact Sprockets," uses a split sprocket to drive a chain. The primary purpose is noise reduction (the leading teeth are resilient), rather than tensioning. Col. 3, lines 25-43 discusses figure 5, "wherein the consequences of a slack chain are overcome," but the consequences are primarily collision of sprocket teeth and chain, and both sprockets are split to reduce noise from collisions, rather than to take up slack. The two halves of the sprockets are at a fixed offset, not spring loaded.

Yasukawa and Fujita, U.S. Patent 4,688,441, "Gear Assembly for Mating with Third Gear without Backlash", shows a split gear for use in an antibacklash gear mechanism, in which the halves of the split gear are biased through use of a "C-clip", and shows a method of assembling the gear. Again, the gear meshes with another gear, and is not a sprocket for use with a chain.

In Futami et al, U.S. Patent 5,116,283, "Power Transmission System with Two Sets of Chains", two chains go over two sets of concentric sprockets. The inner and outer sprockets in each set arc manually relatively rotated to tension opposite sides of each chain. Thus, one chain takes up strain on acceleration, one on deceleration.

### SUMMARY OF THE INVENTION

The invention is a split sprocket for use with power transmission chains, with a spring rotationally biasing the halves of the sprocket, in which the relative rotation of the two halves under the influence of the spring caused an effective increase in diameter of the saddles between the teeth of the sprocket, thereby automatically taking up tension in a chain.

### BRIEF DESCRIPTION OF THE DRAWING

Fig. 1 shows a chain and sprocket set and compression-type toothed chain, using the sprocket tensioner of the invention.
Fig. 2 shows a detail of a sprocket of the invention, with three chain links.
Fig. 3 shows an exploded view of a sprocket of an embodiment of the invention.

### DETAILED DESCRIPTION OF THE INVENTION

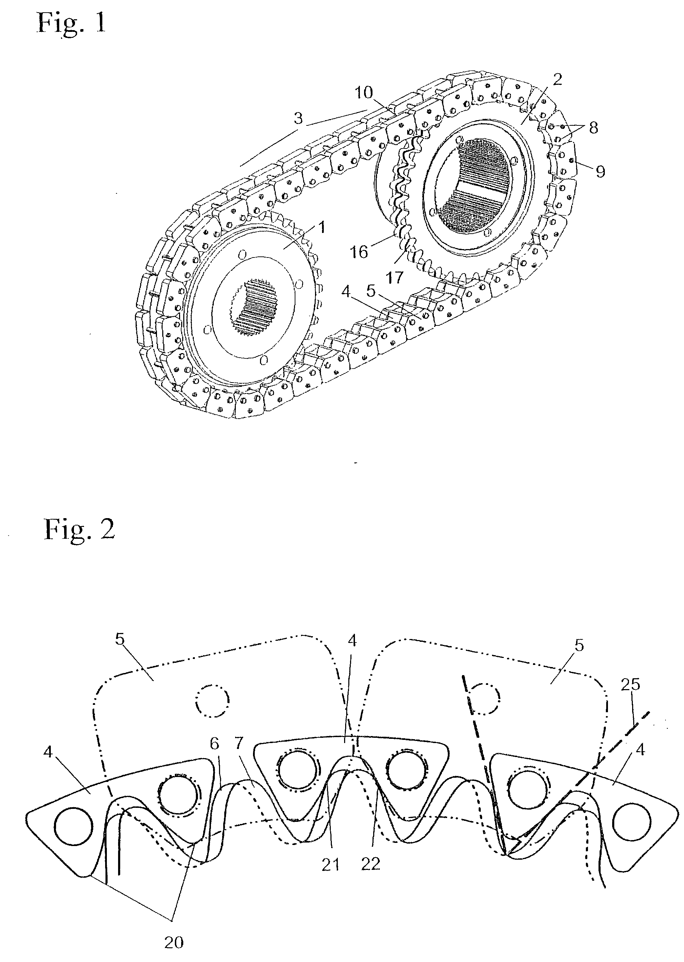

Figure 1 shows the sprocket (2) of the invention, as it would be used with a novel compression-type toothed chain (3), which is the subject of another patent application by the present inventors. Figure 2 is a close-up of several links of chain, as they interact with the teeth (6) and (7) of the sprocket (2). The chain has toothed engaging blocks (4) which have teeth (20) which engage with the teeth (6) and (7) of the sprockets (1)(2) to transfer power to or from the chain and the driving and driven sprockets. Pins (8) connect the engaging blocks (4) to guide links (5), which perform the function of load transfer from one block (4) to the next. The guide links (5) are shown in dotted lines in figure 2, so as to show the sprocket teeth and engaging blocks more clearly. A flexible steel band (10) runs over the top of the engaging blocks (4), retained by pins (9), to hold the blocks (4) and guides (5) in place.

The sprocket (2) current invention is made up of two distinct sprocket halves (16) and (17). On each sprocket half ((16) and (17)) the geometry of the teeth ((6) and (7), respectively) are similar, and the teeth are equally spaced around the circumference of the sprocket at a constant inter-tooth spacing (or "pitch").

Assembling the halves with the faces of the teeth coincident with one another results in a sprocket assembly with prior art tooth geometry as described above. By rotating one half of the sprocket (say, (16)) with respect to the second half (17), the "V" (25) narrows. This in turn forces the toe (21)(22) of the link outward relative to the center of the sprocket. The radial movement of the chain (3) on the sprocket (2) is limited by it's physical length. Any additional load that the sprocket imparts on the chain increases the tension in the chain assembly.

The sprocket halves (16)(17) are biased to rotate, one relative to the other, by a resilient element such as a spring between the two halves. Preferably, the halves (16)(17) are biased from the first, aligned, position toward a second position which is in the direction of rotation of the sprocket, which allows the chain to drive the biased tooth first, transmitting torque initially through the resilient element.

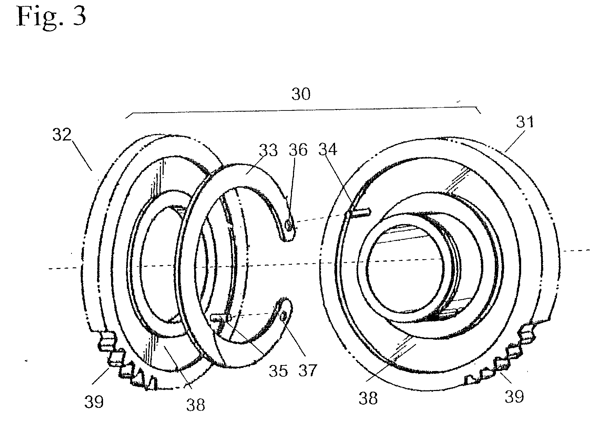

In the embodiment shown in figure 3, the two sprocket halves (31)(32) surround a conventional "spring clip"(33) in a recess (38). Other forms of torsion springs, compression or tension springs could be used in other variations of the design. The spring clip (36) is fastened to the sprocket halves (31)(32) by pins (34)(35) fitting into holes (36)(37) in the ends of the clip (33). When assembled, the tooth halves do not line up when spring is at its at rest condition. As the teeth are rotated to be in alignment with each other, the end gap of the spring is closed to exert outward force. The sprocket would be pinned in this position prior to placed into service by a temporary pin (not shown). After installation in the application, the pin would be removed, allowing the spring to attempt to return to its "at rest" position. This would force the toes of the chain radially outward, thus applying tension to the system.

Accordingly, it is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. A sprocket for tensioning a chain, comprising:
a) a body (2) having a thickness, and a plurality of teeth spaced at a pitch around a circumference of the gear, the thickness of the body being split into a first section (16) and a second section (17) rotatable on an axis of rotation between a first position in which the teeth of the first section are aligned with the teeth of the second section, to a second position;
b) a resilient element (33) biasing the second section of the sprocket toward the second position;
such that as the second section is rotated from the first position toward the second position, and the teeth of the first section and the second section are moved past each other, a "V" (25) is formed between the teeth of the first section and the teeth of the second section, and as the second section moves closer to the second position, a depth of the "V" decreases.

2. The sprocket of claim 1, in which the resilient element is a torsion spring located in a recess formed between the first section and the second section.

3. The sprocket of claim 1 or 2, in which the second position being rotationally opposite a direction of rotation of the sprocket from the first position, such that when a rotational force is applied to the teeth of the second section in the direction of rotation, the force is applied to the first section through the resilient element.

4. The sprocket of claim 1, 2 or 3, further comprising a chain having teeth for engaging the teeth of the sprocket, the teeth of the chain riding in the "V", such that as the second section of the sprocket is rotated toward the second position, the changing depth of the "V" adjusts a tension of the chain.

5. A method of tensioning a chain having teeth for engaging the teeth of a sprocket, the sprocket comprising a body having a thickness, and a plurality of teeth spaced at a pitch around a circumference of the gear, the thickness of the body being split into a first section and a second section rotatable on an axis of rotation between a first position in which the teeth of the first section are aligned with the teeth of the second section, to a second position;
the method comprising rotating the second section of the sprocket from the first position toward the second position, causing the teeth of the first section and the second section to moved past each other, forming a "V" between the teeth of the first section and the teeth of the second section, so that as the second section moves closer to the second position, a depth of the "V" decreases, and the changing depth of the "V" adjusts a tension of the chain.

6. The method of claim 5, in which the step of rotating the second section is accomplished by providing a resilient element biasing the second section of the sprocket toward the second position.

7. The method of claim 6, in which the resilient element is a torsion spring located in a recess formed between the first section and the second section.

8. The method of claim 5. 6 or 7, in which the second position is rotationally opposite a direction of rotation of the sprocket from the first position, such that when a rotational force is applied to the teeth of the second section in the direction of rotation, the force is applied to the first section through the resilient element.
